# FASCICULE DE BREVET EUROPEEN

(11) **EP 3 300 555 B1**
(45) Date de publication et mention de la délivrance du brevet: **04.12.2019**
(21) Numéro de dépôt: 17193088.6
(22) Date de dépôt: 26.09.2017
(51) Int. Cl.: A01B 29/04

(54) **ÉLÉMENT PNEUMATIQUE D'OUTIL AGRICOLE COMPRENANT UNE EMBASE RIGIDE**
PNEUMATISCHES ELEMENT EINES LANDWIRTSCHAFTLICHEN WERKZEUGS, DAS EINE STARRE GRUNDPLATTE UMFASST
PNEUMATIC ELEMENT OF AN AGRICULTURAL TOOL COMPRISING A RIGID BASE

(30) Priorité: 30.09.2016 FR 1659462
(43) Date de publication de la demande: 04.04.2018
(73) Titulaire: OTICO, 77650 Chalmaison (FR)
(72) Inventeur: PIOU, Denis, 89340 Villeblevin (FR)
(74) Mandataire: Cabinet Netter

(56) Documents cités:
- EP-A1- 2 269 431
- DE-A1- 10 215 477
- FR-A1- 2 776 239

## Description

L'invention concerne un élément pneumatique pour un outil agricole, et plus particulièrement un élément du type comprenant un pneumatique non gonflé avec une bande de roulement et une paire de flancs raccordés chacun à la bande de roulement en une première portion d'extrémité respective.

Les éléments pneumatiques de ce type peuvent être montés sur une jante ou un tube support pour former un outil agricole sous la forme d'une roue ou d'un rouleau. L'outil agricole qui en résulte sert au travail des champs, en particulier à y former des sillons ou à les refermer.

Les éléments sont disposés les uns à côtés des autres selon un pas qui correspond à l'écartement des sillons entre eux et/ou de semoirs.

Dans certaines conditions de travail, par exemple lorsque la terre est collante ou en présence de boue, les outils agricoles, et en particulier leurs éléments pneumatiques, s'encrassent. Cet encrassement diminue les performances de travail des outils. L'encrassement détériore également les outils eux-mêmes, par une usure prématurée des pièces qui les composent et/ou une tendance à désolidariser ces pièces les unes des autres, en particulier les pneumatiques du reste de leur élément.

Depuis longtemps maintenant, la Demanderesse travaille sur des dispositions constructives permettant aux éléments pneumatiques de se nettoyer par eux-mêmes en travail. Il s'agit par exemple d'augmenter la capacité des pneumatiques à se déformer pour favoriser le décollement de la terre ou des boues.

Dans sa demande de brevet en France publiée sous le numéro FR 2 997 653 par exemple, la Demanderesse a proposé un pneumatique dont le profil présente un point d'inflexion sur les flancs. Ce point d'inflexion permet au pneumatique de s'affaisser sur lui-même en fonctionnement, décollant ainsi la boue qui s'est accumulée sur ce pneumatique, en particulier sur ses flancs.

Augmenter la capacité du pneumatique à se déformer ne suffit généralement pas à réaliser un outil agricole fonctionnel. Il convient encore que ce pneumatique soit suffisamment rigide pour travailler la terre, que les éléments pneumatiques résistent aux chocs qui peuvent survenir en travail et aux efforts qui s'exercent sur eux, en particulier lorsqu'il s'agit de faire négocier un virage au rouleau ou à la roue. Les éléments pneumatiques doivent également rester peu coûteux à fabriquer et être aisément remplaçables, en cas de bris notamment.

Un pneumatique destiné à un rouleau agricole est également divulgué dans le document FR 2 776 239 A1.

La Demanderesse a décidé d'aller plus loin encore et de s'intéresser à l'encrassement des volumes situés entre les pneumatiques d'un outil agricole, que ceux-ci équipent des outils agricoles sous la forme de rouleaux ou de roues.

À cette fin, elle propose un élément d'outil agricole du type comprenant un pneumatique non gonflé avec une bande de roulement et une paire de flancs raccordés chacun à la bande de roulement en une première portion d'extrémité respective. L'élément comprend en outre une embase rigide, généralement annulaire, par l'intermédiaire de laquelle le pneumatique se monte sur un support rotatif d'outil agricole, et en ce que les flancs sont surmoulés chacun sur une portion périphérique de l'embase rigide en une seconde portion d'extrémité, opposée à la bande de roulement.

Grâce à la configuration remarquable de l'élément pneumatique proposé, le pneumatique de celui-ci et son embase peuvent être réalisés en des matériaux différents l'un de l'autre. Le pneumatique peut être réalisé en un matériau souple, qui lui confère une bonne capacité de déformation et une bonne efficacité de travail. Le pneumatique peut être agencé de manière à se nettoyer seul. L'embase peut être réalisée en un matériau rigide, en comparaison du moins du matériau du pneumatique. L'embase présente ainsi la rigidité et la solidité nécessaires pour supporter les efforts et les chocs qui surviennent lorsque l'outil fonctionne. La configuration de l'embase et le matériau dans lequel elle est réalisée peuvent être choisis conjointement de manière à se passer de pièces supplémentaires de renfort. Le matériau de l'embase peut en particulier être choisi parmi des matériaux peu sensibles à l'adhérence de boues ou traités à cette fin. L'embase peut être réalisée en matière plastique.

L'élément pneumatique proposé présente une bonne rigidité circonférentielle et une bonne souplesse en surface. La cohésion entre la partie souple de l'élément, qui comprend une portion radialement extérieure du pneumatique, et la partie rigide de cet élément, qui comprend l'embase, est assurée par le montage particulier du pneumatique sur l'embase, qui comprend un surmoulage du pneumatique sur l'embase.

L'élément pneumatique proposé est plus léger que les éléments classiques où l'élément est dépourvu d'embase et/ou réalisé d'un seul tenant avec le pneumatique, et des armatures, généralement métalliques, sont utilisées dans la semelle du pneumatique.

D'autres caractéristiques et avantages de l'invention apparaîtront à l'examen de la description détaillée ci-après, et des dessins annexés sur lesquels :
- la figure 1 représente un rouleau agricole vu en perspective isométrique partiellement éclatée ;
- la figure 2 représente le rouleau de la figure 1 en perspective isométrique partiellement coupée et éclatée ;
- la figure 3 représente le rouleau de la figure 1, vu en demi-coupe longitudinale ;
- la figure 4 représente le rouleau de la figure 1 en coupe transversale, selon la ligne IV-IV ;
- la figure 5 représente une embase pour le rouleau de la figure 1, vue de face ;
- la figure 6 représente l'embase de la figure 4, en coupe selon la ligne VI-VI ;
- la figure 7 représente l'embase de la figure 5, en coupe selon la ligne VII-VII ;
- la figure 8 représente l'embase de la figure 5, en coupe selon la ligne VIII-VIII ;
- la figure 9 représente un détail IX du rouleau de la figure 2 ;
- les figures 10 à 12 sont analogues aux figures 2 à 4 respectivement et représentent un rouleau agricole selon une première variante de réalisation ;
- les figures 13 à 15 sont analogues aux figures 2 à 4 respectivement et représentent un rouleau agricole selon une seconde variante de réalisation ;
- la figure 16 représente une roue agricole, vue en perspective isométrique partiellement coupée et éclatée ;
- la figure 17 représente la roue agricole de la figure 16, vue en perspective isométrique partiellement coupée ;

Les dessins annexés contiennent des éléments de caractère certain. Ils pourront non seulement servir à compléter l'invention, mais aussi contribuer à sa définition, le cas échéant.

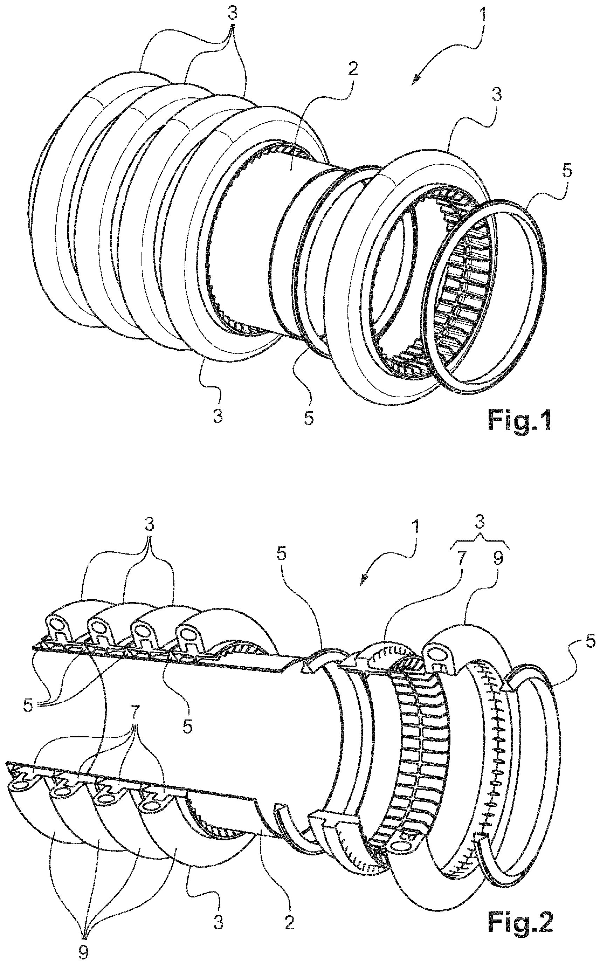

On fait référence à la figure 1.

Elle montre un exemple d'outil agricole sous la forme d'un rouleau 1. Le rouleau 1 comprend un tube support allongé 2 et une pluralité d'éléments pneumatiques 3 généralement annulaires. Les éléments pneumatiques sont enfilés sur le tube support 2 selon la direction longitudinale de celui-ci. Chaque élément pneumatique 3 comprend deux grandes faces latérales généralement parallèles entre elles.

Le rouleau 1 comprend en outre une pluralité d'entretoises 5 généralement annulaires. Les entretoises 5 sont enfilées sur le tube support 2, selon la direction longitudinale de celui-ci. À chaque fois, une entretoise 5 est intercalée entre deux grandes faces de deux éléments pneumatiques 3 voisins.

Les faces latérales des éléments pneumatiques 3 sont au contact les unes des autres par l'intermédiaire des entretoises 5. Le rouleau 1 comprend encore deux flasques non représentés, montés chacun sur le tube support 2 à une extrémité respective de l'empilement des éléments pneumatiques 3. Les flasques sont agencés de telle manière que les éléments pneumatiques 3 se trouvent pressés les uns contre les autres en comprimant les entretoises 5. L'effort résultant appliqué sur les flasques d'extrémité peut être voisin d'une tonne (dix mille newtons).

On fait référence aux figures 2 à 4.

Chaque élément pneumatique 3 comprend une embase 7 généralement annulaire et un pneumatique 9 accroché à l'embase 7.

L'embase 7 présente une face intérieure 11 par l'intermédiaire de laquelle l'élément pneumatique 3 est monté sur le tube support 2 et une face extérieure 13, radialement opposée à la face intérieure 11 et sur laquelle est accroché le pneumatique 9.

Le pneumatique 9 comprend une portion formant bande de roulement 9-1 et deux portions formant flancs 9-2 généralement parallèles entre elles et reliées à l'une de leurs extrémités respectives à la bande de roulement 9-1. Les flancs 9-2 s'étendent généralement de manière radiale. Ici, les flancs 9-2 se rejoignent mutuellement en une portion à peu près médiane 9-3. Cette portion médiane 9-3, la bande de roulement 9-1 et la partie des flancs 9-2 reliant la partie médiane 9-3 à la bande de roulement 9-1 délimitent conjointement une chambre 9-4. Cette chambre 9-4 se trouve en communication fluidique avec l'extérieur du pneumatique 9, par l'intermédiaire d'un orifice non représenté. Le pneumatique 9 est du type non gonflé et semi-creux.

Ici, la bande de roulement 9-1 présente un profil légèrement bombé radialement vers l'extérieur du pneumatique 9. La chambre 9-4 présente un profil ovale. La courbure de la bande de roulement 9-1 correspond à un demi-ovale.

Le pneumatique 9 est en matériau souple, par exemple en élastomère, en caoutchouc et/ou en polyuréthane. En particulier, la dureté Shore du matériau du pneumatique 9 est comprise entre 50 HRC et 75 HRC. Le pneumatique 9 peut se déformer en travail. L'embase 7 est en matériau rigide, par exemple un matériau thermoplastique.

L'embase 7 présente une nervure périphérique, ou nervure extérieure 15, qui fait saillie de sa face extérieure 13 et s'étend de manière circonférentielle. Ici, la nervure extérieure 15 s'étend dans une zone médiane de l'embase 7.

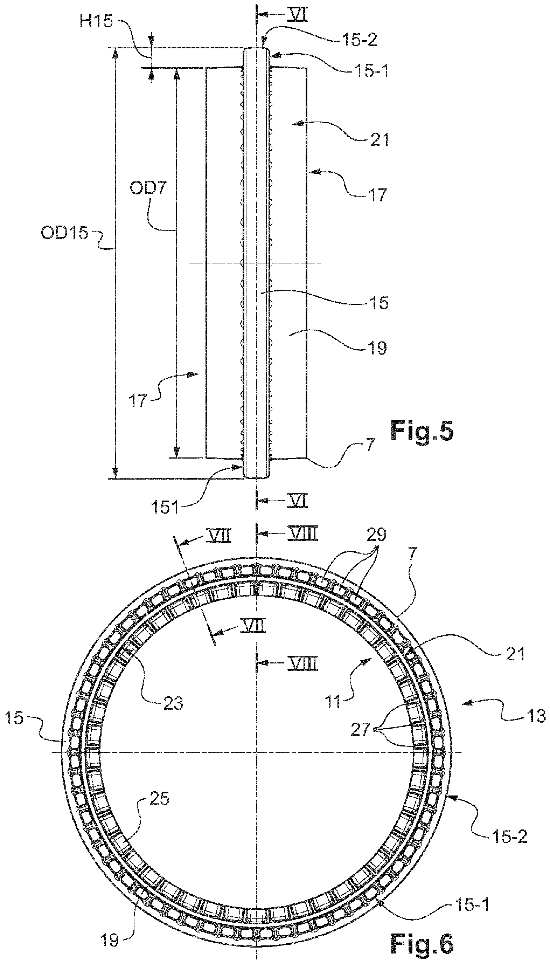

Le pneumatique 9 est accroché sur la nervure extérieure 15. La nervure extérieure 15 présente deux flancs 15-1 (visibles sur la figure 5) reliés entre eux par une bande formant sommet 15-2 (visible sur la figure 5). Les flancs 15-1 de la nervure extérieure 15 présentent chacun un profil droit. Ces flancs 15-1 s'étendent sensiblement de manière radiale. Le sommet 15-2 présente un profil légèrement bombé. Par cette forme convexe du sommet 15-2, les efforts qui surviennent en travail sur le pneumatique 9 sont dirigés sur les portions latérales de l'embase 7.

Les flancs 9-2 du pneumatique 9 s'accrochent sur les flancs 15-1 de la nervure extérieure 15 tandis que la portion médiane 9-3 du pneumatique 9 vient en contact avec le sommet 15-2 de la nervure 15. Les flancs 9-2 du pneumatique 9 s'accrochent sur une partie qui va de leur portion médiane 9-3 à leur extrémité opposée à la bande de roulement 9-1. Cette partie des flancs 9-2 du pneumatique 9 et la portion médiane 9-3 sont agencées de manière à former une rainure circonférentielle dans le pneumatique 9. Le profil de cette rainure circonférentielle correspond au profil de la nervure extérieure 15. Il en résulte une coopération de forme qui contribue à l'assemblage mutuel du pneumatique 9 et de l'embase 7. Les flancs 9-2 du pneumatique 7 s'accrochent sur toute la hauteur des flancs 15-1 de la nervure extérieure 15. Les extrémités des flancs 9-2 du pneumatique 9 éloignées de la bande de roulement 9-1 se trouvent en contact avec le reste de l'embase 7, au niveau de la face extérieure 13 de cette dernière.

Le pneumatique 9 est réalisé de manière monobloc.

Le tableau suivant donne un jeu de valeurs de mesures pour l'outil 1 des figures 1 à 4, à titre d'exemple uniquement.

| pièce | mesure | référence | valeur |
|---|---|---|---|
| tube support 2 | diamètre extérieur | OD2 | 406,4 mm |
| embase 7 | diamètre intérieur | ID7 | 407 mm |
| embase 7 | diamètre extérieur | OD7 | 456 mm |
| embase 7 | largeur | W7 | 117 mm |
| pneumatique 9 | diamètre extérieur | OD9 | 600 mm |
| pneumatique 9 | largeur | W9 | 65 mm |
| élément pneumatique 3 | pas | P3 | 125 mm |

Le diamètre extérieur de l'embase 7 s'entend hors nervure extérieure 15.

On fait référence aux figures 5 à 8.

L'embase 7 présente deux grandes faces latérales 17 parallèles entre-elles. Les faces latérales 17 relient chacune la face intérieure 11 à la face extérieure 13. L'embase 7 comprend un corps 19 généralement tubulaire qui s'étend entre les faces latérales 17. Le corps 19 présente une surface extérieure 21 qui correspond à la face extérieure 13 de l'embase 7 et une surface intérieure 23 généralement cylindrique et radialement opposée à la surface extérieure 21.

La nervure extérieure 15 se raccorde à la surface extérieure 21 du corps 19. Les flancs 15-1 de la nervure extérieure 15 s'étendent sensiblement radialement. L'embase 7 comprend une pluralité de rainures qui font saillie radialement de la surface intérieure 23 du corps 19 à la face intérieure 11 de l'embase 7 par l'intermédiaire desquelles l'embase 7 se monte sur un tube support.

L'embase 7 comprend ici une seconde nervure, ou nervure intérieure 25, qui fait saillie radialement de la surface intérieure 23 et s'étend de manière circonférentielle sur cette surface intérieure 23.

L'embase 7 comprend en outre une pluralité de troisièmes nervures, ou nervures axiales 27, qui font saillie radialement de la surface intérieure 23 du corps 19 et s'étendent généralement axialement. Les nervures axiales 27 relient chacune la nervure intérieure 25 à l'une ou l'autre des faces latérales 17 de l'embase 7. Les nervures axiales 27 sont régulièrement réparties de manière angulaire sur la surface intérieure 23 du corps 19.

Chaque nervure axiale 27 se raccorde à l'une de ses extrémités longitudinales à la nervure intérieure 25. Chaque nervure longitudinale 27 présente une extrémité libre 29 opposée à la nervure intérieure 25. Cette extrémité libre 29 est biseautée de telle sorte que cette extrémité libre 29 s'évase en direction radiale vers l'extérieur. Ici, l'extrémité libre 29 correspond à une face latérale de l'embase 7, là où elle se raccorde au corps 9. Chaque nervure axiale 27 présente ainsi une allure de trapèze droit, dont la grande base se raccorde au corps 19, sur la surface intérieure 23 de celui-ci, et la petite base coïncide avec la face intérieure 11 de l'embase 7.

La nervure intérieure 25 présente une arête sommet 25-1 par l'intermédiaire de laquelle l'embase 7 vient en contact extérieurement avec la paroi d'un tube support, par exemple le tube support 2 des figures 1 à 4. Chaque nervure axiale 27 présente une arête sommet 27-1 par l'intermédiaire de laquelle l'embase 7 vient en contact extérieurement avec la paroi d'un tube support, par exemple le tube support 2 des figures 1 à 4.

Les nervures axiales 27 et la nervure intérieure 25 assurent un guidage long de l'embase 7 sur le tube support. Les nervures axiales 27 et la nervure intérieure 25 rigidifient le corps 19. Elles forment en outre conjointement un réseau de nervures qui confère à l'embase 7 une structure alvéolaire de masse assez réduite compte tenu de sa rigidité.

La nervure extérieure 15 présente un profil généralement rectangulaire, ici presque carré. La nervure 15 présente une pluralité d'évidements 29 qui débouchent sur les flancs 15-1 de la nervure extérieure 15. Ces évidements 29 contribuent à accrocher les pneumatiques 9 sur l'embase 7, en particulier lorsque cet accrochage est réalisé en surmoulant le pneumatique 9 sur l'embase 7. La matière qui forme le pneumatique 9 pénètre dans chacun des évidements 29 lors du moulage. En se solidifiant, la matière y forme une forme analogue à un crochet qui retient le pneumatique 9 sur la nervure extérieure 15.

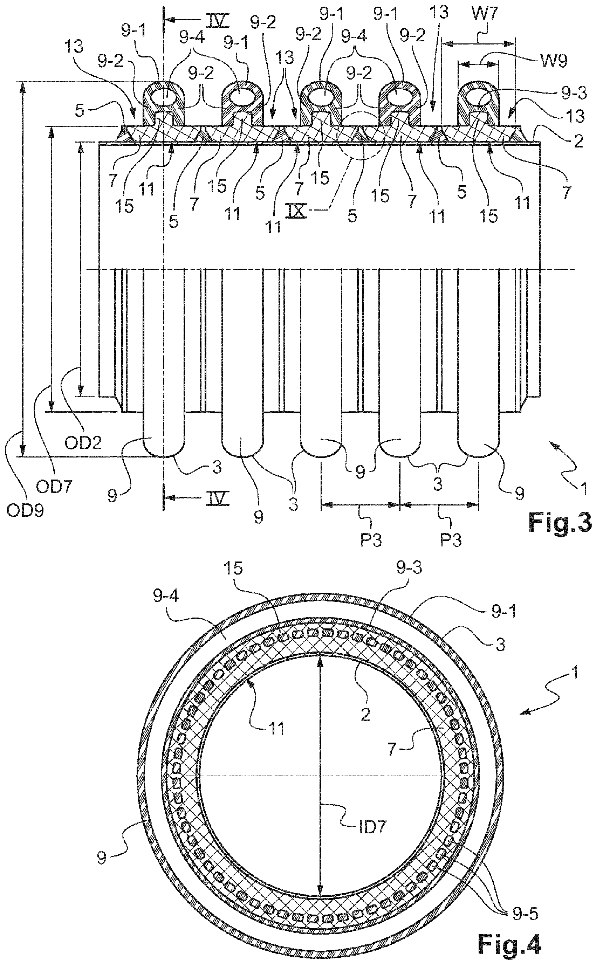

Ici, chaque évidement 29 débouche sur chacun des flancs 15-1 de la nervure extérieure 15. Les évidements 29 prennent la forme d'orifices qui s'étendent généralement selon la direction axiale de l'embase 7. Ces orifices provoquent une jonction de matière 9-5 (visible sur la figure 4) entre les flancs 9-2 du pneumatique 9 lors du surmoulage. Cette jonction 9-5 est située sur une portion d'extrémité des flancs 9-2 du pneumatique 9 opposée à la bande de roulement 9-1. La jonction 9-5 rigidifie grandement l'assemblage mutuel du pneumatique 9 et de l'embase 7. Cette jonction 9-5 consolide également le pneumatique 9. Cette jonction 9-5 agit à la manière d'un rivet qui traverse les flancs 9-2 et la nervure extérieure 15 de l'embase 7.

Chaque évidement 29 se présente ici sous la forme de deux portions tronconiques 29-1 qui se raccordent dans un plan médian de l'embase 7 et s'évasent en direction des flancs 15-1 de la nervure extérieure 15. Lors du surmoulage du pneumatique 9, cette forme tronconique guide la matière vers le plan médian de l'embase 7.

Les évidements 29 sont formés à la base de la nervure 15 de sorte à ne pas affaiblir cette nervure 15.

La surface extérieure 21 du corps 19 présente un profil légèrement incliné par rapport à la direction axiale de l'embase 7. Cette surface extérieure 21 présente deux portions 21-1 tronconiques avec un angle au sommet assez faible. Chaque portion tronconique 21-1 se rétrécit en allant du plan médian de l'embase 7 vers une face latérale 17 respective de cette embase 7. Cette inclinaison permet d'évacuer la boue ou la terre depuis les pneumatiques 9 vers une partie de l'embase 7 où elles nuisent le moins aux performances de l'outil.

L'embase 7 est réalisée de manière monobloc.

Le tableau suivant donne un jeu de valeurs de mesures pour l'embase 7 des figures 5 à 8. Ce jeu de valeurs est compatible avec l'outil 1 des figures 1 à 4. Il est donné à titre d'exemple uniquement.

| Portion | mesure | référence | valeur |
|---|---|---|---|
| nervure 15 | largeur | W15 | 30 mm |
| nervure 15 | hauteur | H15 | 22,2 mm |
| embase 7 sans nervure 15 | épaisseur | T7 | 26,5 mm |
| évidement 29 | hauteur | H29 | 11,5 mm |
| nervure 15 | diamètre extérieur | OD15 | 504,4 mm |

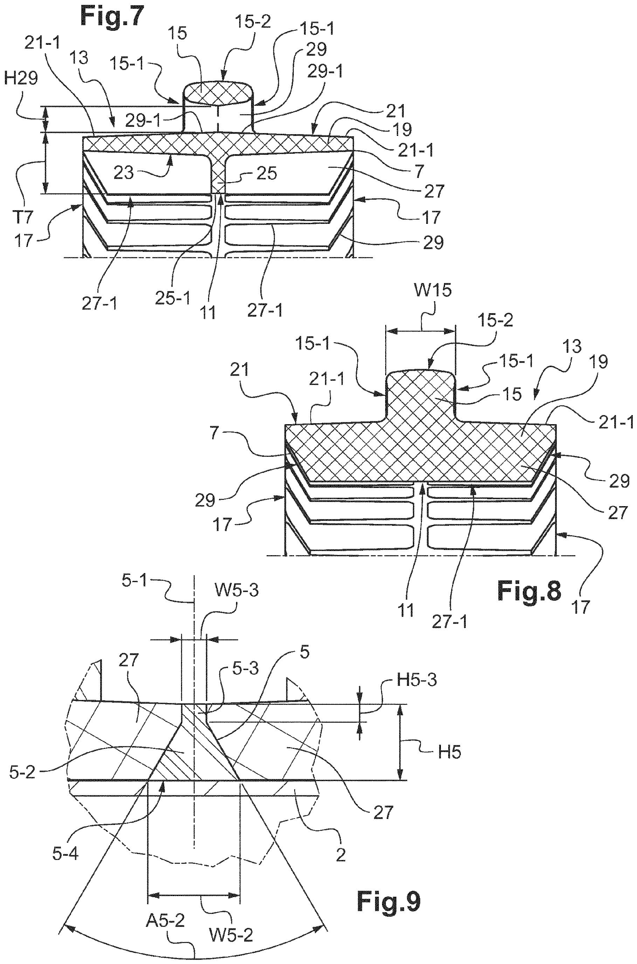

On fait référence à la figure 9.

L'entretoise 5 présente une allure symétrique par rapport à un plan médian 5-1. L'entretoise 5 présente deux grandes faces latérales parallèles entre elles. Chaque face latérale de l'entretoise 5 est agencée en correspondance de forme avec la face latérale d'une embase 7.

L'entretoise 5 présente une portion radialement intérieure 5-2 et une portion radialement extérieure 5-3 qui se raccorde à la portion intérieure 5-2. La portion intérieure 5-2 présente un profil en forme de trapèze isocèle. La grande base de ce trapèze forme une surface interne 5-4 de l'entretoise 5 par l'intermédiaire de laquelle cette entretoise 5 vient en contact avec la paroi du tube support 2. Les côtés de ce trapèze sont inclinés par rapport à la direction radiale de manière correspondante aux extrémités libres des nervures longitudinales 27. La portion extérieure 5-3 présente un profil généralement carré dont le côté correspond à la petite base de la portion intérieure 5-2.

Le tableau suivant donne un jeu de valeurs de mesures pour l'entretoise 5 de la figure 9. Ce jeu de valeurs est compatible avec l'outil 1 des figures 1 à 4. Il est donné à titre d'exemple uniquement.

| Portion | mesure | référence | valeur |
|---|---|---|---|
| intérieure 5-2 | largeur maximale | W5-2 | 30 mm |
| intérieure 5-2 | inclinaison des flancs | A5-2 | 60° |
| extérieure 5-3 | largeur | W5-3 | 8 mm |
| extérieure 5-3 | hauteur | H5-3 | 6 mm |
| ensemble | hauteur | H5 | 24,8 mm |

Au montage des éléments pneumatiques 3 sur le tube 2, et surtout au serrage, la forme trapézoïdale des entretoises 5 coopère avec celle biseautée des nervures longitudinales 27 pour faire fluer la matière des entretoises 5 dans les alvéoles des embases 7 et sous les nervures axiales 27. Ce faisant les entretoises 5 font adhérer les embases 7 à la paroi extérieure du tube support 2. Cette adhérence contrecarre les mouvements de rotation relative de ces embases 7 autour du tube support 2. De tels mouvements tendent à se produire en travail, en particulier lorsque le rouleau 1 vire. Cette coopération de forme entre les entretoises 5 et les faces latérales 17 des embases 7 assure en outre une étanchéité de l'ensemble sur la longueur du rouleau 1. Cette étanchéité empêche la boue, la terre ou les saletés de pénétrer, depuis l'extérieur, entre les embases 7 et le tube support 2.

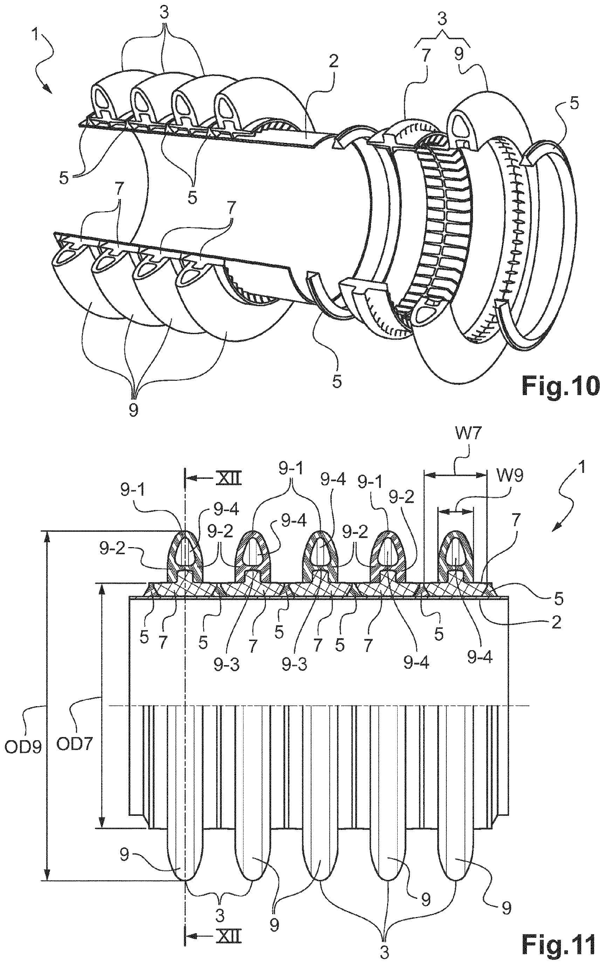

On fait référence aux figures 10 à 12.

Les éléments fonctionnellement analogues portent des références numériques identiques aux figures 2 à 4.

Le rouleau agricole 1 se distingue de celui des figures 2 à 4 par la forme du pneumatique 9 des éléments 3. Ici, la bande de roulement 9-1 est étroite. Les flancs 9-2 sont généralement droits en regard de la nervure 15 de l'embase 7 puis se courbent de manière à se rapprocher l'un de l'autre en direction de la bande de roulement 9-1. La chambre 9-4 présente un profil généralement triangulaire et isocèle dont la base est plus courte que les côtés égaux. Les pneumatiques 9 sont plus hauts que dans l'exemple de réalisation des figures 1 à 4. Par exemple leur diamètre extérieur OD9 est voisin de 650 millimètres.

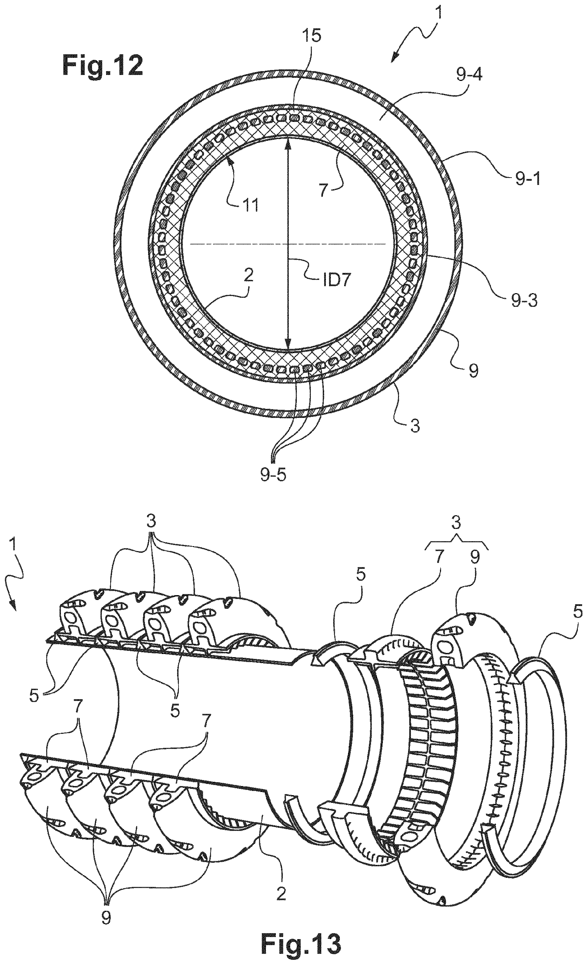

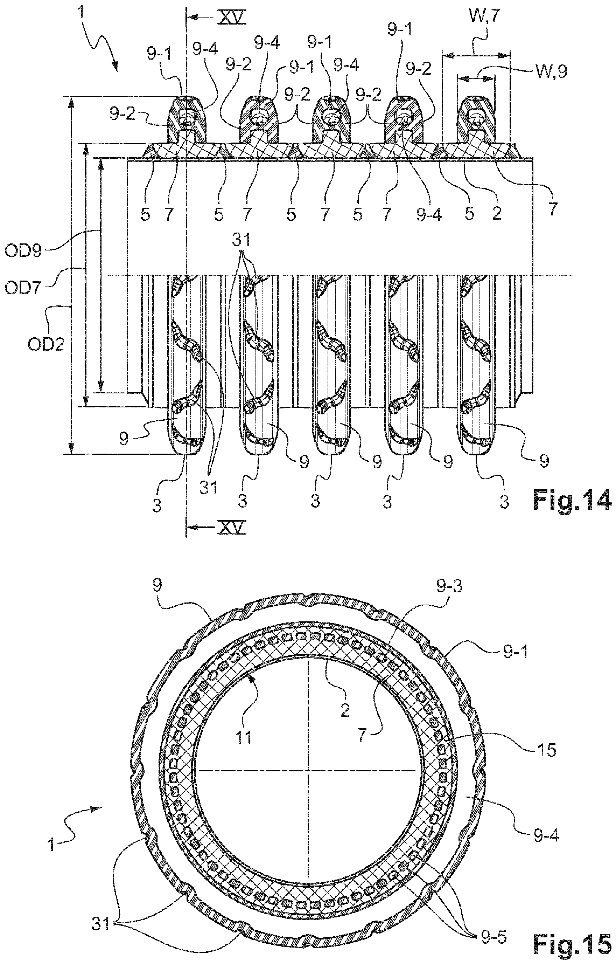

On fait référence aux figures 13 à 15.

Les éléments fonctionnellement analogues portent des références numériques identiques aux figures 2 à 4.

Le rouleau agricole 1 se distingue de celui des figures 2 à 4 par la forme du pneumatique 9 des éléments 3. Ici, la bande de roulement 9-1 reste assez large. Les flancs 9-2 sont généralement droits en regard de la nervure 15 de l'embase 3 puis s'inclinent par rapport à la direction radiale de manière à se rapprocher l'un de l'autre en direction de la bande de roulement 9-1. La chambre 9-4 présente un profil généralement carré. Par exemple, le diamètre extérieur OD9 des pneumatiques est voisin de 620 millimètres.

La bande de roulement 9-1 présente des sculptures 31. Ces sculptures 31 sont inclinées par rapport à la direction axiale des pneumatiques 9. En complément ou en replacement, la bande de roulement 9-1 peut présenter des crampons, en particulier de profil analogue à celui des sculptures 31.

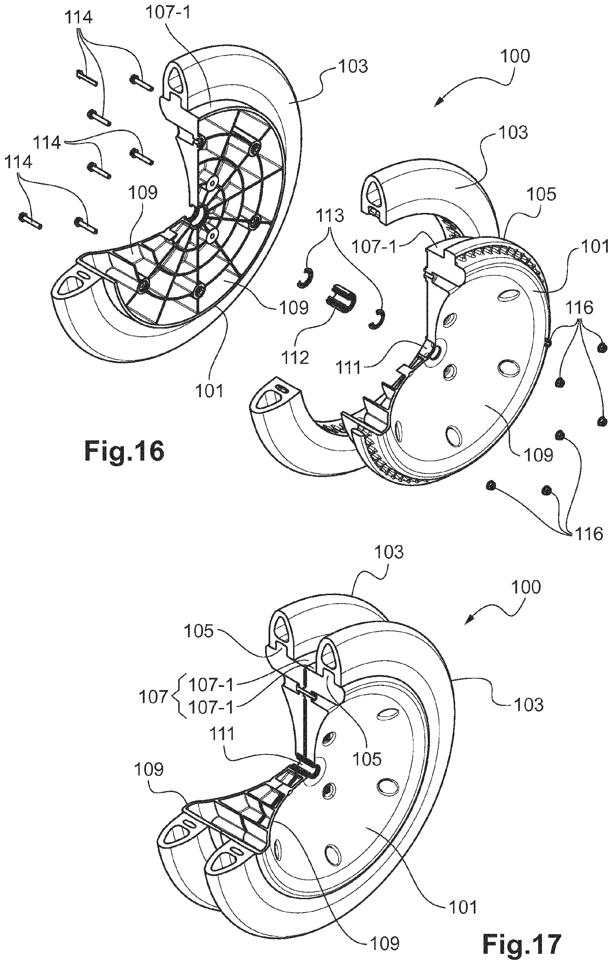

On fait référence aux figures 16 et 17.

Elles montrent un outil agricole sous la forme d'une roue 100.

La roue 100 comprend une jante 101 et une paire de pneumatiques 103 accrochée à la jante 101. Ici, les pneumatiques 9 sont analogues aux pneumatiques 9 des figures 10 à 12. La jante 101 forme un support rotatif pour les pneumatiques 103

La jante 101 présente une paire de nervures 105 chacune analogue aux nervures extérieures 15 des figures 1 à 9. Les nervures 105 font saillie radialement de la jante 101. Les nervures 105 s'étendent chacune de manière circonférentielle. Les nervures 105 s'étendent parallèlement l'une à l'autre. À chaque fois, un pneumatique 103 est accroché à une nervure 105 respective par surmoulage à la manière de ce qui a été décrit plus haut en relation avec les figures 1 à 9. La partie périphérique de la jante forme une embase de profil analogue à l'embase 7 des figures 1 à 15.

La jante 101 présente une surface extérieure 107 axialement inclinée, au moins sur la partie de cette surface qui se trouve entre les nervures 105. Sur cette partie, la surface 107 présente deux portions tronconiques 107-1 qui se rétrécissent en direction l'une de l'autre.

Ici, la jante 101 est réalisée en assemblant une paire de flasques 109 entre eux. Chaque flasque 109 présente une forme de demi-jante. Chaque flasque 109 porte une nervure 105 respective. Les flasques sont à voile plein. Sur leur grande face opposée au voile, chaque flasque 109 présente un réseau de nervure qui lui confère une structure alvéolée.

La roue 100 présente un moyeu 111 réalisé par l'aboutement d'orifices centraux respectifs des flasques 109. Le moyen 111 reçoit un palier ici sous la forme d'un roulement 112 à double rangées de billes. Le roulement 112 est ici maintenu par deux anneaux élastiques 113 de type circlips. Les flasques 109 peuvent être montés l'un sur l'autre et maintenus fermement dans cette position par un jeu d'attaches, ici formées chacune par un couple vis 114 et écrou 116.

L'invention n'est pas limitée aux modes de réalisation décrits plus haut, à titre d'exemple uniquement. En particulier :
- La nervure extérieure 15 pourrait présenter plus d'une rangée d'évidements 29, en particulier lorsque cette nervure 15 présente une hauteur plus importante afin d'accueillir des pneumatiques 9 de profil plus élancé. En particulier, la nervure extérieure 15 peut dans ce cas présenter deux rangées d'évidements 29, répartis chacun sur des cercles de diamètres différents. Les évidements 29 de ces rangées peuvent être décalés les uns des autres angulairement, afin notamment de conserver la résistance de la nervure extérieure 15.
- Chaque embase 7 peut comporter plus d'une nervure extérieure 15.
- Les pneumatiques 9 accrochés à l'embase 7 peuvent pour certains d'entre eux au moins être du type dit "plein", c'est-à-dire dépourvus de chambre 9-4. Les éléments pneumatiques 3 d'un rouleau 1 par exemple peuvent présenter des pneumatiques 9 différents les uns des autres. Par exemple, on peut disposer sur le tube support 2 une alternance d'éléments 3 à pneumatiques 9 pleins et d'éléments 3 à pneumatiques 9 semi-creux. Les pneumatiques 9 de ces éléments 3 peuvent également présenter des configurations différentes les uns des autres et/ou être réalisés en des matériaux différents les uns des autres. Ceci permet en particulier de réaliser une alternance d'éléments 3 à pneumatiques 9 plus durs et d'éléments à pneumatiques 9 plus souples.
- Le profil des pneumatiques 9 décrit ci-dessus peut être modifié selon l'application envisagée. Ces pneumatiques 9 peuvent en particulier présenter une allure plus étroite afin de former des sillons plus étroits. Au contraire, ces pneumatiques peuvent également présenter une allure plus large. Il convient cependant que la largeur d'un pneumatique 9 soit en rapport avec la largeur de la nervure extérieure 15 sur laquelle il s'accroche afin notamment d'éviter un décollement des flancs 9-2 en une zone éloignée de cette nervure 15. Dans le cas de pneumatiques 9 très larges, on peut prévoir un accrochage sur deux rainures extérieures 15 ou plus.
- Le diamètre extérieur du rouleau peut être compris entre 250 et 900 millimètres. Le diamètre du tube support 2 peut être compris entre 190 et 750 millimètres. Son épaisseur entre 5 et 6,3 millimètres. Le pas des pneumatiques 9 peut prendre une valeur dans le groupe formé par 143, 150 et 167 millimètres.

## Revendications

1. Élément (3) d'outil agricole du type comprenant un pneumatique (9, 103) non gonflé avec une bande de roulement (9-1) et une paire de flancs (9-2) raccordés chacun à la bande de roulement (9-1) en une première portion d'extrémité respective, l'élément (3) comprenant en outre une embase (7, 107), généralement annulaire, par l'intermédiaire de laquelle le pneumatique (9, 103) se monte sur un support rotatif (2, 101) d'outil agricole, **caractérisé en ce que** l'embase (7, 107) est rigide, et **en ce que** les flancs (9-2) sont surmoulés chacun sur une portion périphérique de l'embase rigide (7, 107) en une seconde portion d'extrémité, opposée à la bande de roulement (9-1).

2. Élément selon la revendication 1, dans lequel la portion périphérique de l'embase rigide (7, 107) et la seconde portion d'extrémité des flancs (9-2) sont mutuellement agencées en coopération de forme.

3. Élément selon l'une des revendications 1 et 2, dans lequel la seconde portion d'extrémité des flancs (9-2) est conformée en partie au moins en une rainure radialement intérieure du pneumatique (9, 103), la portion périphérique de l'embase rigide (7) comprend au moins une nervure (15, 105) et la rainure et la nervure (15, 105) sont mutuellement agencées en correspondance de forme.

4. Élément selon l'une des revendications précédentes, dans laquelle la portion périphérique de l'embase rigide (7, 107) comporte une pluralité d'évidements (29) et les secondes portions d'extrémité des flancs (9-1) s'étendent en partie au moins à travers ces évidements (29).

5. Élément selon la revendication 4, dans lequel certains au moins des évidements (29) débouchent à proximité de la seconde portion d'extrémité de chacun des flancs (9-2) et le pneumatique (9) comprend au moins une jonction de matière (9-5) entre les flancs (9-2) et cette jonction de matière (9-5) traverse l'un au moins des évidements (29).

6. Élément selon l'une des revendications précédentes, dans lequel l'embase rigide (7, 107) est plus large que le pneumatique (9).

7. Élément selon l'une des revendications précédentes, dans lequel l'embase rigide (7, 107) présente une face intérieure (11) qui présente un réseau de nervures (27, 25) lui conférant une structure alvéolée.

8. Outil agricole du type comprenant au moins deux éléments pneumatiques (3) selon l'une des revendications précédentes.

9. Outil agricole selon la revendication 8 comprenant une jante 101), dans lequel au moins une embase (7) est réalisée en tant que partie périphérique de la jante.

10. Outil selon la revendication 9, dans lequel la partie périphérique de l'embase (7) comporte deux nervures circonférentielles (105) sur chacune desquelles est surmoulé un pneumatique (103) respectif.

11. Outil selon la revendication 8, dans lequel le support rotatif (2) est généralement tubulaire et allongé et comprenant une pluralité d'éléments pneumatiques (3) montés sur le support rotatif (2) de manière alignée selon la direction longitudinale du support rotatif (2).

12. Outil agricole selon la revendication 11 comprenant en outre une pluralité d'entretoises en matériau souple intercalées à chaque fois entre les embases d'éléments pneumatiques mutuellement adjacents.

13. Outil agricole selon la revendication 12, dans lequel les entretoises (5) présentent au moins une grande face latérale et les embases (7) présentent au moins une grande face latérale (17) et les grandes faces latérales des entretoises (5) d'une part et des embases (7) d'autre part présentent des formes mutuellement conjuguées.

14. Outil selon la revendication 13, dans lequel la grande face latérale des embases (7) présente un bord biseauté, la grande face latérale des entretoises (5) présente une surface biseautée et la surface biseautée et le bord biseauté sont mutuellement conjugués.

## Patentansprüche

1. Element (3) eines landwirtschaftlichen Werkzeugs des Typs, der einen nicht aufgeblasenen Luftreifen (9, 103) mit einer Lauffläche (9-1) und einem Paar Flanken (9-2) umfasst, die jeweils mit der Lauffläche (9-1) in einem jeweils ersten Endabschnitt verbunden sind, wobei das Element (3) ferner eine im Allgemeinen ringförmige Basis (7, 107) umfasst, auf der der Reifen (9, 103) auf einem rotierenden Träger (2, 101) eines landwirtschaftlichen Werkzeugs montiert ist, **dadurch gekennzeichnet, dass** die Basis (7, 107) starr ist und dass die Flanken (9-2) jeweils auf einem Umfangsabschnitt der starren Basis (7, 107) in einem zweiten Endabschnitt gegenüber der Lauffläche (9-1) aufgeformt sind.

2. Element nach Anspruch 1, wobei der Umfangsabschnitt der starren Basis (7, 107) und der zweite Endabschnitt der Flanken (9-2) so zueinander angeordnet sind, dass ihre Formen zusammenwirken.

3. Element nach einem der Ansprüche 1 und 2, wobei der zweite Endabschnitt der Flanken (9-2) mindestens teilweise in einer radial inneren Nut des Luftreifens (9, 103) geformt ist, wobei der Umfangsabschnitt der starren Basis (7) mindestens eine Rippe (15, 105) umfasst und die Nut und die Rippe (15, 105) so zueinander angeordnet sind, dass ihre Formen einander entsprechen.

4. Element nach einem der vorhergehenden Ansprüche, wobei der Umfangsabschnitt der starren Basis (7, 107) eine Vielzahl von Aussparungen (29) aufweist und sich die zweiten Endabschnitte der Flanken (9-1) mindestens teilweise durch diese Aussparungen (29) hindurch erstrecken.

5. Element nach Anspruch 4, wobei mindestens einige der Aussparungen (29) in der Nähe des zweiten Endabschnitts jeder der Seitenwände (9-2) münden und der Luftreifen (9) mindestens eine Materialverbindung (9-5) zwischen den Flanken (9-2) aufweist und diese Materialverbindung (9-5) durch mindestens eine der Aussparungen (29) verläuft.

6. Element nach einem der vorhergehenden Ansprüche, wobei die starre Basis (7, 107) breiter als der Luftreifen (9) ist.

7. Element nach einem der vorhergehenden Ansprüche, wobei die starre Basis (7, 107) eine Innenfläche (11) mit einem Netzwerk von Rippen (27, 25) aufweist, die ihr eine Wabenstruktur verleihen.

8. Landwirtschaftliches Werkzeug des Typs, der mindestens zwei Luftreifenelemente (3) nach einem der vorhergehenden Ansprüche umfasst.

9. Landwirtschaftliches Werkzeug nach Anspruch 8 mit einer Felge (101), wobei mindestens eine Basis (7) als Umfangsteil der Felge ausgeführt ist.

10. Werkzeug nach Anspruch 9, wobei der Umfangsteil der Basis (7) zwei Umfangsrippen (105) aufweist, auf denen jeweils ein entsprechender Luftreifen (103) aufgeformt ist.

11. Werkzeug nach Anspruch 8, wobei der rotierende Träger (2) im Allgemeinen rohrförmig und länglich ist und eine Vielzahl von Luftreifenelementen (3) umfasst, die auf dem rotierenden Träger (2) in Längsrichtung des rotierenden Trägers (2) ausgerichtet montiert sind.

12. Landwirtschaftliches Werkzeug nach Anspruch 11, ferner umfassend eine Vielzahl von Abstandshaltern aus flexiblem Material, die jeweils zwischen den Basen von aneinander angrenzen Luftreifenelementen angeordnet sind.

13. Landwirtschaftliches Werkzeug nach Anspruch 12, wobei die Abstandshalter (5) mindestens eine große Seitenfläche aufweisen und die Basen (7) mindestens eine große Seitenfläche (17) aufweisen und die großen Seitenflächen der Abstandshalter (5) einerseits und der Basen (7) andererseits einander zugeordnete Formen aufweisen.

14. Werkzeug nach Anspruch 13, wobei die große Seitenfläche der Basen (7) einen abgeschrägten Rand aufweist, die große Seitenfläche der Abstandshalter (5) eine abgeschrägte Oberfläche aufweist und die abgeschrägte Oberfläche und der abgeschrägte Rand einander zugeordnet sind.

## Claims

1. Agricultural tool element (3) of the type comprising a non-inflated tire (9, 103) with a tread (9-1) and a pair of sidewalls (9-2) each connected to the tread (9-1) at a respective first end portion, the element (3) additionally comprising a generally annular base (7, 107), by means of which the tire (9, 103) is fitted on a rotary support (2, 101) of an agricultural tool, **characterized in that** the base (7, 107) is rigid and **in that** the sidewalls (9-2) are each over-molded on a peripheral portion of the rigid base (7, 107) at a second end portion, opposite the tread (9-1).

2. Element according to Claim 1, wherein the peripheral portion of the rigid base (7, 107) and the second end portion of the sidewalls (9-2) are arranged with cooperation of form relative to one another.

3. Element according to one of Claims 1 and 2, wherein the second end portion of the sidewalls (9-2) is formed at least partly in a radially inner groove in the tire (9, 103), the peripheral portion of the rigid base (7) comprises at least one rib (15, 105), and the groove and the rib (15, 105) are arranged with correspondence of form relative to one another.

4. Element according to one of the preceding claims, wherein the peripheral portion of the rigid base (7, 107) comprises a plurality of recesses (29), and the second end portions of the sidewalls (9-1) extend at least partly through these recesses (29).

5. Element according to Claim 4, wherein at least some of the recesses (29) open in the vicinity of the second end portion of each of the sidewalls (9-2), and the tire (9) comprises at least one junction of material (9-5) between the sidewalls (9-2), and this junction of material (9-5) passes through at least one of the recesses (29).

6. Element according to one of the preceding claims, wherein the rigid base (7, 107) is wider than the tire (9).

7. Element according to one of the preceding claims, wherein the rigid base (7, 107) has an inner face (11) with a network of ribs (27, 25) which provides it with an alveolar structure.

8. Agricultural tool, of the type comprising at least two pneumatic elements (3) according to one of the preceding claims.

9. Agricultural tool according to Claim 8, comprising a rim (101) in which at least one base (7) is provided as a peripheral part of the rim.

10. Tool according to Claim 9, wherein the peripheral part of the base (7) comprises two circumferential ribs (105), on each of which a respective tire (103) is over-molded.

11. Tool according to Claim 8, wherein the rotary support (2) is generally tubular and elongate, and comprises a plurality of pneumatic elements (3) fitted on the rotary support (2) in a manner which is aligned according to the longitudinal direction of the rotary support (2).

12. Agricultural tool according to Claim 11, additionally comprising a plurality of braces made of flexible material which are interposed in each case between the bases of mutually adjacent pneumatic elements.

13. Agricultural tool according to Claim 12, wherein the braces (5) have at least one large lateral face, and the bases (7) have at least one large lateral face (17), and the large lateral faces of the braces (5) on the one hand and the bases (7) on the other hand have mutually conjugated forms.

14. Tool according to Claim 13, wherein the large lateral face of the bases (7) has a beveled edge, the large lateral face of the braces (5) has a beveled surface, and the beveled surface and the beveled edge are mutually conjugated.
